**Europäisches Patentamt**

**European Patent Office**

**Office européen des brevets**

(19)

(11) Veröffentlichungsnummer: **0 051 072**

**A1**

(12) **EUROPÄISCHE PATENTANMELDUNG**

Veröffentlicht nach Art. 158 Abs. 3 EPÜ

(21) Anmeldenummer: **80902126.4**

(22) Anmeldetag: **31.10.80**

Daten der zugrundeliegenden internationalen Anmeldung:

(86) Internationale Anmeldenummer:
**PCT/JP80/00273**

(87) Internationale Veröffentlichungsnummer:
**WO81/01272 (14.05.81 81/12)**

(51) Int. Cl.³: **B 62 D 9/00**
**A 61 G 5/04**

(30) Priorität: **31.10.79 JP 150086/79**

(43) Veröffentlichungstag der Anmeldung:
**12.05.82 Patentblatt 82/19**

(84) Benannte Vertragsstaaten:
**FR**

(71) Anmelder: **JYROCAR CO., LTD.**
**3-8-11-101 Sendagaya Shibuya-ku**
**Tokyo 151(JP)**

(72) Erfinder: **SHIRAISHI, Yoshiro**
**3-8-11-101 Sendagaya Shibuya-ku**
**Tokyo 151(JP)**

(72) Erfinder: **TSUNAKI, Ichiro**
**1-15-11 Dai-Machi, Hachioji-city**
**Tokyo 193(JP)**

(74) Vertreter: **Berngruber, Otto et al,**
**Hans-Sachs-Strasse 5**
**D-8000 München 5(DE)**

(54) **MOTORGETRIEBENE LENKVORRICHTUNG ZUM VERÄNDERN DER RICHTUNG EINER BEWEGUNG.**

(57) A shifter, capable of changing direction of movement, for use in a wheelchair or industrial vehicle. The shifter includes doughnut-shaped wheels inclined at a given angle with respect to the surface of travel, axles for the wheels, retained on the vehicle body, so as to enable variation in the inclination of the wheels, and a motor which is mounted on the vehicle body and which is connected to the axles through links. Operating the motor allows the direction of movement to be changed by varying the inclination of the axles through the links connected thereto.

Fig. 1

EP 0 051 072 A1

- 1 -

## Beschreibung

Die Erfindung bezieht sich auf ein Fahrgestell, dessen Fahrtrichtung durch einen Elektromotor beliebig geändert werden kann. Das Laufrad ist kugelringförmig ausgebildet und die Berührungsfläche des Laufradumfangs mit der Bewegungsebene ist kugelig ausgebildet. Das kreisringförmige Laufrad ist gegenüber der Bewegungsebene mit einem bestimmten Winkel geneigt. Beim Wechsel der Fahrtrichtung wird die Richtung der Neigung durch den Elektromotor geändert.

Ein Fahrgestell, bei dem ein Kugeltreibrad zur Anwendung kommt, geht beispielsweise aus dem US-Patent 3 655 005 hervor. Die Vor- und Rückwärtsbewegung erfolgt dabei ausschießlich dadurch, daß die Treibachse des ständig mit der Bewegungsebene in Berührung stehenden Kugeltreibrades gegenüber der Fahrtrichtung nach links und nach rechts gekippt und das Parallelgestänge mit dem Kugeltreibrad deformiert wird, wobei die Gegendruckrichtung des Treibrades nach links und nach rechts umgeformt wird.

Durch die Erfindung wird das ständig mit der Bewegungsfläche in Berührung stehende Kugeltreibrad nach dem erwähnten US-Patent derart verbessert, daß das Rad die Form eines Kreisrings oder einer Kreisscheibe besitzt. Die Fahrtrichtung kann durch das Kippen der Antriebswelle, d.h. durch die Änderung der Kontaktpunkte, beliebig geändert werden.

Nachstehend sind Merkmale, Zweck und Effekte der Erfindung anhand von Figuren erläutert. Es zeigen:

Figur 1 eine Seitenansicht auf die Schwenkvorrichtung der Erfindung;

Figur 2 eine Draufsicht gemäß Figur 1 mit teilweise entfernten und neu hinzugefügten Teilen;

-2-

Figur 3 ein Ausführungsbeispiel der Kippbewegung mit angedeutetem Fahrtrichtungswechsel.

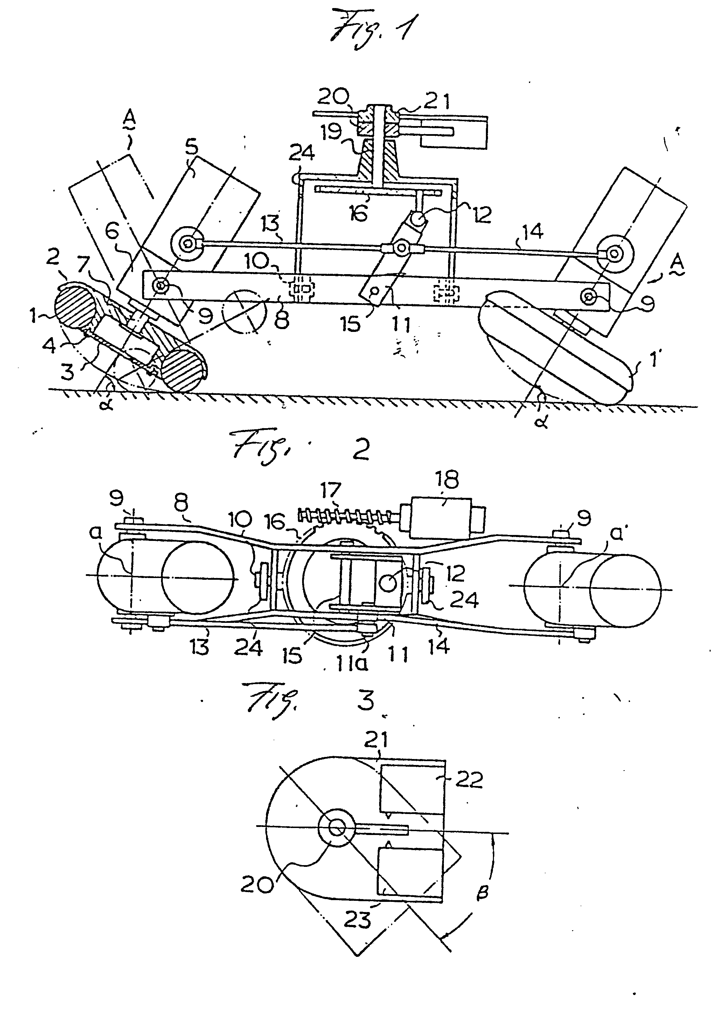

A in Figur 1 stellt eine Laufvorrichtung dar. 1 ist das Laufrad der Laufvorrichtung, das kreisringförmig ausgebildet ist und
aus Gummit oder einem anderen elastischen Stoff besteht und
dessen Achse gegenüber der Bewegungsfläche in einem be-
stimmten Winkel $\alpha$ gehalten ist. Das Laufrad 1 ist zwischen
dem oberen Haltering 2 und der unteren Befestigungsplatte 3
mit einem Bolzen 4 befestigt. Der Laufradhaltering 2 ist mit
der Antriebswelle 7 verbunden, die von einem Elektromotor 5
über ein Reduktionsgetriebe 6 angetrieben wird.

Diese Antriebs- oder Laufvorrichtung A ist an den beiden Enden
(links und rechts jeweils eine) des Stützgestells 8 mit
dem Montagebolzen 9 befestigt. Die beiden Antriebsvorrichtungen
A,A haben den gleichen Neigungswinkel $\alpha$ . Im Zentrum des Stütz-
gestells 8 ist das Schwenkgelenk 11 mittels der Gelenkachse 15
beweglich gehalten. Das Schwenkgelenk 11 und die beiden Antriebsvorrichtungen A, A sind mit den beiden Kippgelenkstangen 13, 14 verbunden, so daß die beiden Antriebsvorrichtungen zusammen entsprechend der Neigung des Schwenkgelenks
bewegt werden. Ferner ist das Stützgestell 8 durch den Montagebolzen 10 des Stützgestells mit dem Montagegestell 24 für
die Fahreinheit verbunden und kippt gegenüber dem Montagebolzen 9 der Antriebsvorrichtung 9 mit einem Winkel von 90°.

Oberhalb des Schwenkgelenks 11 ist das Kugelgelenk 12 vorgesehen, deren Kugel unterhalb des Schneckenrads 16 befestigt
ist. Das Schneckenrad 16 wird vom Elektromotor 18 der Kippbewegung über die Schnecke 17 angetrieben. Beim Drehen des
Schneckenrades 16 bewegt sich das Kugelgelenk 12 um die
Schneckenradachse 19, wobei die beiden Antriebsvorrichtungen
über das Schwenkgelenk 11, das Stützgestell 8 und über die

-3-

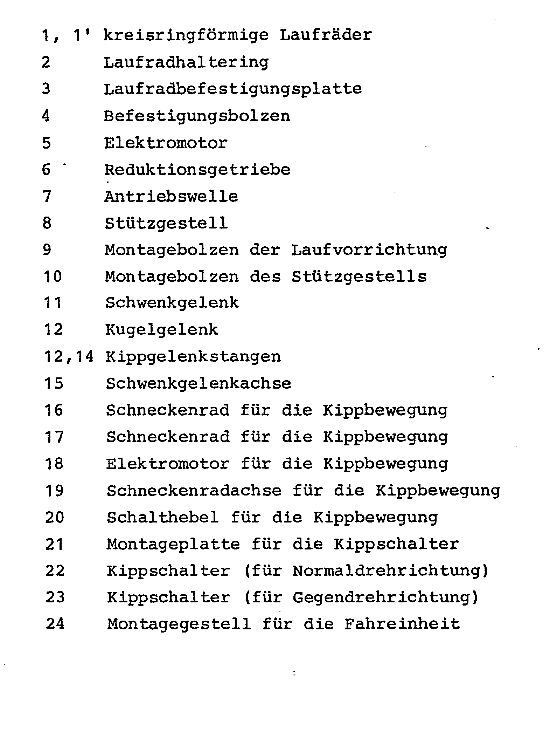

beiden Kippgelenke 13, 14 um die Punkte a, a' (Figur 2)
als Mittelpunkte herumgekippt werden.

An der Schneckenradachse 19 ist der Schalthebel 20 befestigt und die Montageplatte 21 drehbar angebracht. An
der Montageplatte 21 sind die Kippschalter 22 (für Normaldrehrichtung), 23 (für Gegendrehrichtung) so angebracht,
daß in deren Mitte der Schalthebel 20 liegt.

Wenn die Montageplatte 21 der Kippschalter vom Bedienungshebel durch irgendein Mittel um die Schneckenradachse 19
in irgendeiner Richtung gedreht wird, kommt der Schalthebel
20 mit einem der Kippschalter 22, 23 in Berührung. Nun fängt
der Elektromotor 18 der Kippbewegung an zu arbeiten. Der
Motor wird dort ausgeschaltet, wo die Montageplatte 21
angehalten wird (Figur 3). Das Schneckenrad 16 hat sich um
den Winkel $\beta$ gedreht. Die Antriebsvorrichtung wird auch in
der Richtung des Schalthebels 20 gestoppt.

Auf diese Weise kann die Fahrtrichtung leicht und beliebig
gewechselt werden. Als Anwendungsmöglichkeit kommt erstens
die Montage dieser Antriebs- oder Laufvorrichtung an einen
Rollstuhl in Frage, da die Laufvorrichtung ausschließlich
durch Handbedienung den Rollstuhl in beliebiger Stellung
bewegen kann. Ferner gibt es durch den einfachen Mechanismus
der Laufvorrichtung Möglichkeiten, sie nicht nur für den
Rollstuhl, sondern auch für Fahrzeuge im Industriebereich
und für weitere Gebiete zu verwenden.

Bezeichnung: Fahrgestell , das durch einen Elektromotor in
beliebige Richtungen bewegbar ist

Patentansprüche

1. Fahrgestell mit zwei, nämlich einer linken und einer rechten
   Laufvorrichtung mit je einem ringröhrenförmigen Laufrad,
   das gegenüber dem Fahrgestell mit einer bestimmten Neigung
   angeordnet ist, wobei die Berührungsfläche des Laufrades
   mit der Bewegungsebene kugelsegmentförmig ausgebildet ist,
   dadurch gekennzeichnet, daß die Laufrichtung durch das Kippen
   der Laufvorrichtung beliebig geändert werden kann.

2. Fahrgestell nach Anspruch 1, dadurch gekennzeichnet, daß
   es bei einem Rollstuhl angewendet wird.

3. Fahrgestell nach Anspruch 1, dadurch gekennzeichnet, daß
   es bei Industriefahrzeugen angewendet wird.

1/2

0051072

Fig. 1

Fig. 2

Fig. 3

1, 1' kreisringförmige Laufräder

2       Laufradhaltering

3       Laufradbefestigungsplatte

4       Befestigungsbolzen

5       Elektromotor

6       Reduktionsgetriebe

7       Antriebswelle

8       Stützgestell

9       Montagebolzen der Laufvorrichtung

10      Montagebolzen des Stützgestells

11      Schwenkgelenk

12      Kugelgelenk

12,14   Kippgelenkstangen

15      Schwenkgelenkachse

16      Schneckenrad für die Kippbewegung

17      Schneckenrad für die Kippbewegung

18      Elektromotor für die Kippbewegung

19      Schneckenradachse für die Kippbewegung

20      Schalthebel für die Kippbewegung

21      Montageplatte für die Kippschalter

22      Kippschalter (für Normaldrehrichtung)

23      Kippschalter (für Gegendrehrichtung)

24      Montagegestell für die Fahreinheit

# INTERNATIONAL SEARCH REPORT  0051072

International Application No PCT/JP80/00273

## I. CLASSIFICATION OF SUBJECT MATTER (if several classification symbols apply, indicate all) ³

According to International Patent Classification (IPC) or to both National Classification and IPC

B62D 9/00   A61G 5/04

## II. FIELDS SEARCHED

### Minimum Documentation Searched ⁴

| Classification System | Classification Symbols |
|---|---|
| I P C | B62D 9/00, A61G 5/04 |

### Documentation Searched other than Minimum Documentation to the Extent that such Documents are Included in the Fields Searched ⁵

| | |
|---|---|
| Jitsuyo Shinan Koho | 1910 - 1980 |
| Kokai Jitsuyo Shinan Koho | 1971 - 1980 |

## III. DOCUMENTS CONSIDERED TO BE RELEVANT ¹⁴

| Category * | Citation of Document, ¹⁶ with indication, where appropriate, of the relevant passages ¹⁷ | Relevant to Claim No. ¹⁸ |
|---|---|---|
| X | JP, B1,    47-35580 | 1 - 3 |
| X | JP, A,    50-146025 | 1 - 3 |

* Special categories of cited documents: ¹⁵

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search ³ | Date of Mailing of this International Search Report ³ |
|---|---|
| January 26, 1981 (26.01.81) | February 2, 1981 (02.02.81) |

| International Searching Authority ¹ | Signature of Authorized Officer ²⁰ |
|---|---|
| Japanese Patent Office | |

Form PCT/ISA/210 (second sheet) (October 1977)